# EUROPEAN PATENT APPLICATION

(11) **EP 1 870 845 A2**
(43) Date of publication of application: **26.12.2007**
(21) Application number: 07009550.0
(22) Date of filing: 11.05.2007
(51) Int. Cl.: G06Q 10/00

(54) **A compliance facilitating system and method**

(30) Priority: 19.06.2006 GB 0612097; 03.11.2006 US 556532
(71) Applicant: Casewise Limited, Watford Hertfordshire WD17 1DA (GB)
(72) Inventor: Pearman, Raymond Freddie, Chorleywood, Hertfordshire WD3 5DZ (GB)
(74) Representative: Hirsz, Christopher Stanislaw

(57) **Abstract**

A computerized system (1) for facilitating compliance with a number of regulatory regimes includes a first input interface (7) for receiving information about various regulatory regimes and a second input interface (8) for receiving a questions in respect of each regulatory regime for determining whether a user (16) is meeting the requirements of that regulatory regime. The system includes a memory (10) for storing the information about the regulatory regimes and the questions. A comparator (4) determines which questions are substantially similar and a collator (5) collates the questions to form a matrix of associations between questions and regulatory regimes substantially without duplication of questions so that, for any particular question, the regulatory regime to which it applies can be determined, and for any particular regulatory regime, the questions that apply to it can be determined. A controller (3) determines which regulatory regime is applicable to a particular user (16), determines which questions apply for each regulatory regime from the matrix of questions and generates a set of questions for the particular user.

## Description

### Field of the Invention

This invention relates to a system and method for facilitating compliance with regulatory and/or other requirements, particularly, though not exclusively, to such a system and method that can be used to monitor compliance of a user to make it more efficient and less burdensome for the user.

### Background of the Invention

As is well known, companies are facing more and more regulatory requirements, both at state and national level, as well as at international level, if the company trades across national borders. Such regulation can be mandatory, such as for example, various financial and safety requirements; voluntary, such as for example, standards requirements that have to be met if the company is to be certified as meeting those standards; or even internal to the company, such as for example, if a best practices regime is rolled out across the company and it is desired to make sure that everyone adheres to the practice.

In many cases, the various regulatory regimes may well overlap. Indeed, in some cases, very similar regulatory regimes may apply in different jurisdictions, so that a company that operates in those different jurisdictions has to make sure that it complies with each of those regulatory regimes.

As mentioned above, various different regulatory requirements may apply to a company. For example, a company that is listed on a stock exchange will need to comply with the stock exchange's mandatory requirements for reporting and corporate governance. Other similar requirements may be enacted by governments. One well known regulatory regime that has recently been enacted in the USA is the Sarbanes-Oxley Act that imposes strict penalties if its requirements, including the reporting requirements are not complied with. The Sarbanes-Oxley Act provides guidelines as to what a company should communicate to the public and shareholders and for good accounting and financial practices and good IT practices and requires audits of all these areas.

It will thus be seen that many companies, especially those that operate globally, may have a large, and ever increasing, burden of proving (that is to say reporting and auditing) that they have met the various regulatory requirements in each country, whether mandatory or voluntary.

Various methods are known for facilitating and evaluating compliance by providing online systems to help a company meet the requirements for reporting and auditing. A number of such methods and systems have been published in recent years, for example, US Patent Application Publications Nos. US 2003/0055669 (Ryan et al.), US 2003/0120532 (Brumm et al.), US 2004/0139053 (Haunschild), US 2005/0065807 (DeAngelis et al.), US 2005/0065865 (Salomon et al.), US 2005/0071185 (Thompson), US 2005/0288994 (Haunschild), US 2006/0059137 (Walker), PCT Applications Nos. WO 2004/008290 (Ruth), WO 2004/088472 (Trust-Wave Corporation), and WO 2006/023421 (A.M. Best Company, Inc.). In general, most of these systems try to provide ways of helping a company with meeting the appropriate regulatory requirements, be they to do with accounting or other financial requirements, health or safety requirements or other corporate or government regulatory requirements.

The systems tend to provide for an interface between the regulatory bodies that audit compliance with their particular regulatory regimes, and the companies that need to be audited and certified as complying with those regimes. The interface reviews the various regulatory regimes and generates questionnaires that are designed to elicit appropriate answers to allow the regulatory body to audit the company's compliance and issue appropriate certification. The interface then receives the answers from the company and formats the answers into a report to the regulatory body. In some systems, the questionnaire may be split into groups of questions that may be directed to appropriate personnel within a company to answer relatively easily the questions supplied. Furthermore, in some systems, the interface monitors whether the answers are received and sends reminders, as appropriate to provide a more complete automated management system for facilitating compliance.

Despite the improvements in efficiency provided by the various known methods and systems, there are still a large number of regulatory regimes that need to be complied with, reported and audited, and the number is growing all the time. The amount of time (and money) that a company needs to spend on carrying out the compliance, reporting and auditing is therefore constantly increasing. In many companies, there are teams of people employed full time on making sure that this process is carried out properly throughout the year, with each team often being concerned with a different regulatory regime thereby using up a lot of senior management time to make sure that each regulatory regime is being complied with.

### Brief Summary of the Invention

The present invention therefore seeks to provide a system and method for facilitating compliance with regulatory and/or other requirements.

Accordingly, in a first aspect, the invention provides a method for facilitating compliance with a plurality of regulatory regimes, the method comprising, for each regulatory regime, receiving its requirements and generating a plurality of questions to determine whether a user is meeting those requirements, comparing the questions generated for the plurality of regulatory regimes to determine which questions are substantially similar, collating the questions to form a matrix of associations between questions and regulatory regimes substantially without duplication of questions so that, for any particular question, the regulatory regime to which it applies can be determined, and for any particular regulatory regime, the questions that apply to it can be determined, and for a particular user needing to meet one or more predetermined regulatory regimes, determining which questions apply for each of the predetermined regulatory regimes from the matrix of questions and generating a set of questions for that user.

In one embodiment, the method further comprises providing the set of questions to the particular user, receiving answers to the set of questions from the particular user, generating a report to a regulatory body for each of the predetermined regulatory regimes based on the answers received from the particular user and the matrix of questions, and forwarding the appropriate report to each of the regulatory bodies.

The set of questions generated for the particular user may be divided into subsets by function, each subset being provided to a particular person responsible for the corresponding function of the user, the particular person being responsible for providing the answers to the subset of questions.

The method may further comprise generating automatic reminders to the particular person if the answers to the subset of questions are not received within predetermined timeframes.

Whenever a new regulatory regime is introduced, the method may further comprise receiving its requirements and generating a plurality of questions that are intended to elicit information from a user as to whether the user is meeting those requirements, comparing the questions generated for the new regulatory regime with the existing questions in the matrix to determine which questions are substantially similar, and updating the matrix with associations between the new regulatory regime and the existing questions and/or with new questions.

In one embodiment, the method may further provide a visual display of the matrix showing mapping of the associations between the regulatory regimes and the questions. Preferably, the mapping is displayed in graphical or pictographic form.

The matrix may include a hierarchical structure of sub-questions that are subordinate to a particular question and have the same associations as the particular question.

The questions generated for each regulatory regime may be based on a predetermined reference model that complies with the regulatory regime.

The predetermined reference model may be used to provide advice to a user as to how to operate in order to comply with the regulatory regime.

According to a second aspect, the invention provides a system for facilitating compliance with a plurality of regulatory regimes, the system comprising a first input for receiving information regarding a plurality of regulatory regimes, a second input for receiving a plurality of questions in respect of each regulatory regime for determining whether a user is meeting the requirements of that regulatory regime, a memory for storing the information regarding the plurality of regulatory regimes and the plurality of questions; a comparator for determining which questions are substantially similar, a collator for collating the questions to form a matrix of associations between questions and regulatory regimes substantially without duplication of questions so that, for any particular question, the regulatory regime to which it applies can be determined, and for any particular regulatory regime, the questions that apply to it can be determined, the matrix being stored in the memory, a controller for receiving information as to which of the plurality of regulatory regimes a particular user needs to meet, for determining which questions apply for each of the plurality of regulatory regimes from the matrix of questions and for generating a set of questions for the particular user, and an output for providing the generated set of questions.

In one embodiment, the system further comprises a communication path for providing the set of questions to the particular user, a communication path for receiving answers to the set of questions from the particular user, wherein the controller generates a report to a regulatory body for each of the predetermined regulatory regimes based on the answers received from the particular user and the matrix of questions.

The set of questions generated for the particular user may be divided into subsets by function, each subset being provided to a particular person responsible for the corresponding function of the user, the particular person being responsible for providing the answers to the subset of questions.

The controller may generate automatic reminders to the particular person if the answers to the subset of questions are not received within predetermined timeframes.

In one embodiment, whenever information regarding a new regulatory regime is received at the first input and a corresponding plurality of questions is received at the second input, the comparator compares the received questions for the new regulatory regime with the existing questions in the matrix to determine which questions are substantially similar and the collator updates the matrix with associations between the new regulatory regime and the existing questions and/or with new questions.

The system may further comprise a visual display of the matrix showing mapping of the associations between the regulatory regimes and the questions. The mapping may be displayed in graphical or pictographic form.

The matrix may include a hierarchical structure of sub-questions that are subordinate to a particular question and have the same associations as the particular question.

The system may further comprise a module for generating the questions for each regulatory regime. The questions generated for each regulatory regime may be based on a predetermined reference model that complies with the regulatory regime. In a preferred embodiment, the predetermined reference model is stored in the memory and is used by the controller to provide advice to a user as to how to operate in order to comply with the regulatory regime.

In embodiments of the method or system, the regulatory regimes may include any two or more regulatory regimes taken from the group comprising:
mandatory governmental regulations;
mandatory non-governmental regulations;
voluntary governmental regulations;
voluntary non-governmental regulations;
national or international standards regulations;
national or international trade body regulations; and
internal user-required regulations.

The predetermined reference model may comprise, for example, the Information Technology Infrastructure Library (ITIL^{®}) model, or the Enhanced Telecoms Operations Map (ETOM) or the Control Objectives for Information and related Technology (CobIT) framework or another best practice framework or reference model.

### Brief Description of the Drawings

Embodiments of the invention will now be more fully described, by way of example, with reference to the drawings, of which:
FIG. 1 shows a system for facilitating compliance with a plurality of regulatory regimes according to one embodiment of the present invention;
FIG. 2 is a schematic diagram illustrating an example of part of a reference model (the ITIL^{®} model), as applicable to parts of a regulatory regime (the ISO 27001 standard);
FIG. 3 is a schematic diagram illustrating how several regulatory regimes can be combined according to an embodiment of the invention;
FIGs. 4 to 6 show parts of a matrix implemented as a spreadsheet according to an embodiment of the invention;
FIG. 7 shows a schematic flow diagram of one method for facilitating compliance with a plurality of regulatory regimes according to an embodiment of the present invention;
FIG. 8 is a schematic diagram illustrating an example of computer screen displaying different requirements for different regulatory regimes as generated in one embodiment of the present invention; and
FIG. 9 shows some aspects of the method shown in FIG. 4 from the user's perspective in a schematic manner.

### Detailed Description of the Drawings

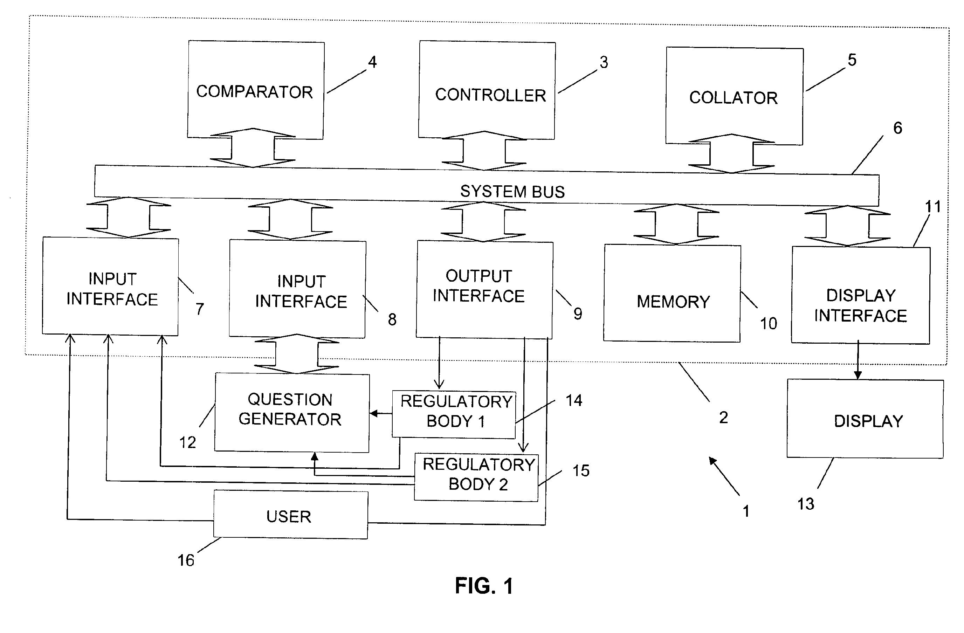

Thus, as shown in FIG. 1, a system 1 for facilitating compliance with a plurality of regulatory regimes according to one embodiment of the present invention includes a module 2, which will probably form part of a computer system. The module 2 includes a controller 3, a comparator element 4 and a collating element 5 coupled together via a system bus 6, all of which may be implemented by a processor of a computer (not shown separately). The system bus 6 is also coupled to input interfaces 7 and 8, output interface 9, memory 10 and display interface 11. Although all these elements are shown separately for ease of understanding, it will be appreciated that any of these elements can be combined, as appropriate in a particular implementation, for example in a computer. A question generator 12 is shown separate from the module 2, but coupled to input interface 8, and a display 13 is shown coupled to display interface 11. Again, the question generator may, in some implementations, form part of a computer implementing the module, or may be an input device to enable a user to input the questions directly.

Input interface 7 is used to receive information, directly or indirectly, from several regulatory bodies 14, 15 regarding their respective regulatory regimes. This input interface 7 is also used to receive communications, including answers to particular sets of questions from a user 16, as will be more fully described below. Information regarding their respective regulatory regimes is also provided to the question generator 12 from the regulatory bodies. It will be appreciated that the communications from the regulatory bodies to the input interface 7 and to the question generator 12 may be of any type. They may include direct communication, for example via the internet and/or email, or they may be indirect with persons being involved in the communication by receiving and inputting such information, as appropriate, or a combination of direct and indirect methods.

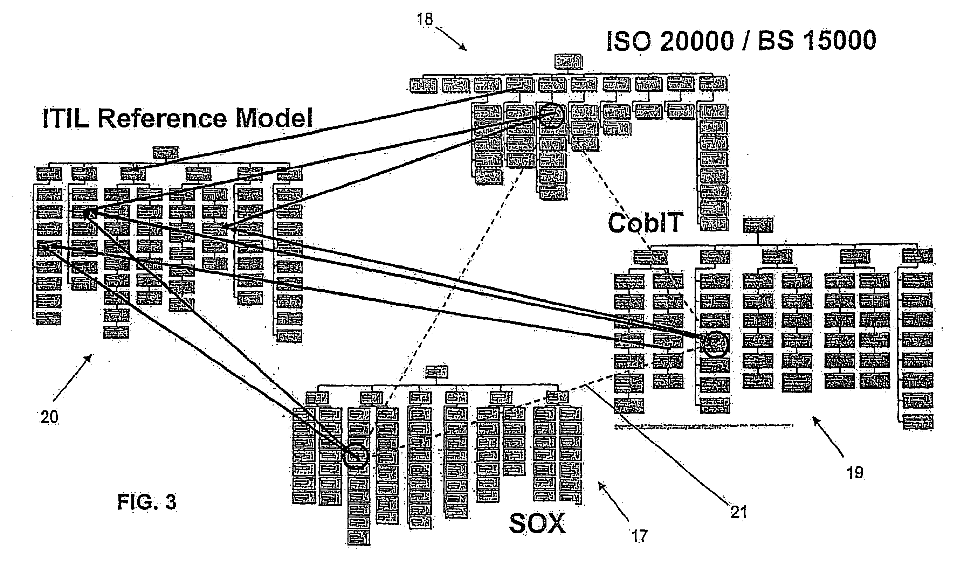

Thus, however the information is provided to the input interface 7, the information includes an identification of the regulatory regime and at least some of its requirements, such as timing and formatting of reports. The regulatory regimes may include, for example, the Sarbanes-Oxley Act in the USA, International Standard ISO 20000 and/or British Standard 15000, International Standard ISO 27001, the Control Objectives for Information and related Technology (CobIT) governance framework. Each of these regulatory regimes comprises a set of regulations, which can be deconstructed into a hierarchical tree of subject areas and requirements to meet those regulations. Parts of such hierarchical trees are shown in FIG. 3 for some of the above mentioned regulatory regimes. Thus, there is shown a part of the hierarchical requirements 17 of the Sarbanes-Oxley Act, part of the hierarchical requirements 18 for International Standard ISO 20000 and/or British Standard 15000, and parts of the hierarchical requirements 19 for the CoblT governance framework. Also shown schematically in FIG. 3 is part of the hierarchical requirements 20 for the Information Technology Infrastructure Library (ITIL®) reference model. The ITIL^{®} is a widely accepted approach to IT service management in the world. ITIL^{®} provides a cohesive set of best practice processes, drawn from the public and private sectors internationally. It is supported by a comprehensive qualifications scheme, accredited training organizations, and implementation and assessment tools. The best practice processes promoted in ITIL^{®} support, and are supported by, the British Standards lnstitution's standard for IT service Management (BS15000). Of course, other reference models, such as the Enhanced Telecoms Operations Map (ETOM) or the Control Objectives for Information and related Technology (CobIT) framework or another best practice framework or reference model may be used.

As an example, with reference to International Standard ISO 27001, the following are some of the sections that deal with the requirements for implementing security measures to maintain the protection of organizational assets:
**4.3.3 Control of Records (Extract from the standard)**
   *Records shall be established and maintained to provide evidence of conformity to requirements and the effective operation of the ISMS*. *They shall be protected and controlled*. *The ISMS shall take account of any relevant legal or regulatory requirements and contractual obligations. Records shall remain legible, readily identifiable and retrievable. The controls needed for the identification, storage, protection, retrieval, retention time and disposition of records shall be documented and implemented*
   *Records shall be kept of the performance of the process as outlined in 4.2 and of all occurrences of significant security incidents related to the ISMS.*
   *EXAMPLE*
   *Examples of records are a visitors' book, audit reports and completed access authorization forms.*
**6.6.1 General (Extract from the standard)**
   *The organization shall conduct internal ISMS audits at planned intervals to determine whether the control objectives, controls, processes and procedures of its ISMS:*
   *a) conform to the requirements of this International Standard and relevant legislation or regulations;*
   *b) conform to the identified information security requirements;*
   *c) are effectively implemented and maintained; and*
   *d) perform as expected*
   *An audit programme shall be planned, taking into consideration the status and importance of the processes and areas to be audited, as well as the results of previous audits. The audit criteria, scope, frequency and methods shall be defined Selection of auditors and conduct of audits shall ensure objectivity and impartiality of the audit process. Auditors shall not audit their own work.*
   *The responsibilities and requirements for planning and conducting audits, and for reporting results and maintaining records (see 4.3.3) shall be defined in a documented procedure.*
   *The management responsible for the area being audited shall ensure that actions are taken without undue delay to eliminate detected nonconformities and their causes. Follow-up activities shall include the verification of the actions taken and the reporting of verification results (see 8).*
   *NOTE: ISO 19011:2002, Guidelines for quality and*/*or environmental management systems auditing, may provide helpful guidance for carrying out the internal ISMS audits.*
**8.1 Continual Improvement (Extract from the standard)**
   *The organization shall continually improve the effectiveness of the ISMS through the use of the information security policy, information security objectives, audit results, analysis of monitored events, corrective and preventive actions and management review (see 7).*
**8.3 Preventative Action (Extract from the standard)**
   *The organization shall determine action to eliminate the cause of potential nonconformities with the ISMS requirements in order to prevent their occurrence. Preventive actions taken shall be appropriate to the impact of the potential problems. The documented procedure for preventive action shall define requirements for:*
   *a) identifying potential nonconformities and their causes;*
   *b) evaluating the need for action to prevent occurrence of nonconformities;*
   *c) determining and implementing preventive action needed;*
   *d) recording results of action taken (see 4.3.3); and*
   *e) reviewing ofpreventive action taken.*
   *The organization shall identify changed risks and identify preventive action requirements focusing attention on significantly changed risks. The priority of preventive actions shall be determined based on the results of the risk assessment.*
   *NOTE: Action to prevent nonconformities is often more cost-effective than corrective action.*

The question generator module 12 takes the requirements for each of the regulatory regimes and generates a plurality of questions to determine whether a user is meeting the requirements for that regime. The questions may be generated automatically, may be taken from pre-existing questions, may be generated manually or in any other way and may be a mixture of these. The questions are, however, in one embodiment, satisfied by adopting the ITIL^{®} reference model, or other best practice framework where appropriate.

An example of the ITIL^{®} model for the ISO 27001 extracts given above is shown in FIG. 3, in which the object called "Implement Security Measures and Maintain the Protection of Organizational Assets" contains various child process objects below it. Based on this ITIL^{®} model, the following questions may be generated:
**4.3.3 Audit Questions**
   4.3.3.a Is there a process in place and being used to establish and maintain records to provide evidence of conformity to requirements and the effective operation of the ISMS?
   4.3.3.b Does this process ensure that these records are protected and controlled?
   4.3.3.c Does this process ensure that the ISMS takes account of any relevant legal or regulatory requirements and contractual obligations?
   4.3.3.d Does this process ensure the records remain legible, readily identifiable and retrievable?
   4.3.3.e Are controls needed to identify, store, protect, retrieve, retain and dispose of records in place/documented?
   4.3.3.f Are records kept of the performance of the processes defined in 4.2 and of all occurrences of significant security incidents related to the ISMS?
**6.6.1 Audit Questions**
   6.6.1.a Is there a process in place/being used to ensure the organization conducts internal ISMS audits at planned intervals?
   6.6.1.b Does this process determine whether the control objectives, controls, processes and procedures conform to the requirements of ISO/IEC 27001:200 and relevant legislation or regulations?
   6.6.1.c Does this process determine whether the control objectives, controls, processes and procedures conform to the identified information security requirements?
   6.6.1.d Does this process determine whether the control objectives, controls, processes and procedures are effectively implemented and maintained?
   6.6.1.e Does this process determine whether the control objectives, controls, processes and procedures perform as expected?
   6.6.1.f Is there an audit programme planned and in place, taking into consideration the status and importance of the processes and areas to be audited, as well as the results of previous audits?
   6.6.1.g is there a process in place/being used to ensures that the audit criteria, scope, frequency and methods are defined?
   6.6.1.h Is there a process in place and being used for the selection of auditors that ensures objectivity and impartiality of the audit process and that auditors shall not audit their own work?
   6.6.1.i Is there a documented procedure in place and being used that defines the responsibilities and requirements for planning and conducting of audits and for reporting results and maintaining records (in accordance with 4.3.3)?
   6.6.1.j is there a process in place and being used to ensure that management responsible for the area being audited takes actions without undue delay to eliminate detected nonconformities and their causes?
   6.6.1.k Is there a process in place and being used to ensure that follow-up activities include the verification of the actions taken and the reporting of verification results in accordance with Clause 8?
**8.1 Audit Questions**
   8.1.a Is there a process in place and being used to ensure that the organization continually improves the effectiveness of the ISMS through the use of the information security policy, information security objectives, audit results, analysis of monitored events, corrective and preventive actions and management review (in accordance with Clause 7)?
**8.3 Audit Questions**
   8.3.a Is there a process in place and being used to ensure that action is determined to eliminate the cause of potential non conformities with the ISMS requirements in order to prevent their occurrence?
   8.3.b Does this process ensure that preventive actions taken are appropriate to the impact of the potential problems?
   8.3.c Is there a documented procedure in place and being used for preventive actions?
   8.3.d Does this procedure ensure that potential nonconformities and their causes are identified?
   8.3.e Does this procedure ensure that the need for action to prevent occurrence of non conformities is evaluated?
   8.3.f Does this procedure ensure that the necessary preventive action is determined and implemented?
   8.3.g Does this procedure ensure that the results of action taken is recorded (in accordance with 4.3.3)?
   8.3.h Does this procedure ensure that preventive action taken is reviewed?
   8.3.i Is there a process in place and being used to ensure that the organization identifies changed risks and preventive action requirements, focusing attention on significantly changed risks?
   8.3.j Is there a process in place and being used to ensure that the priority of preventive actions is determined based on the results of the risk assessment?

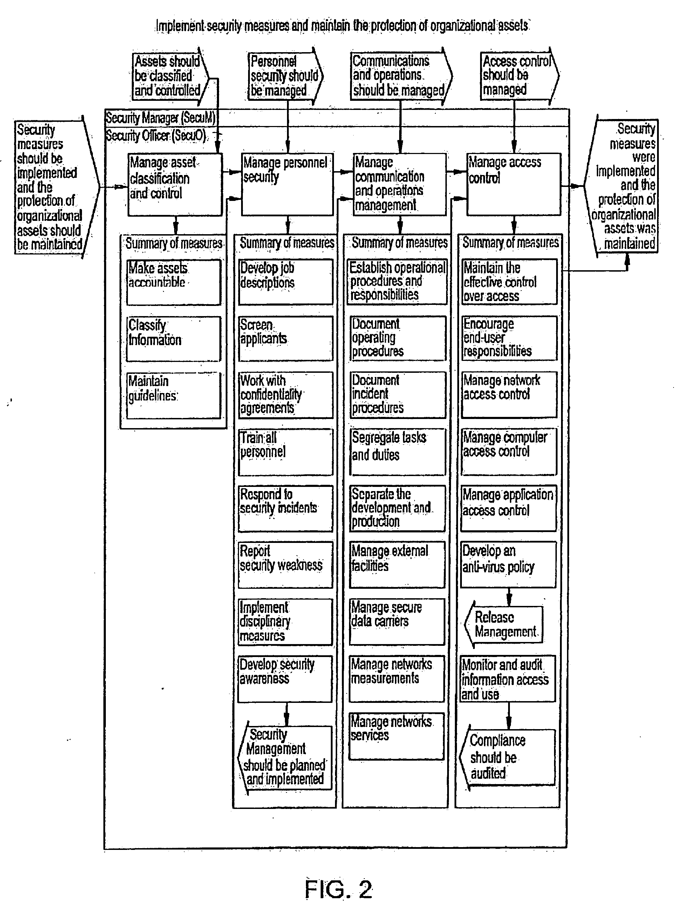

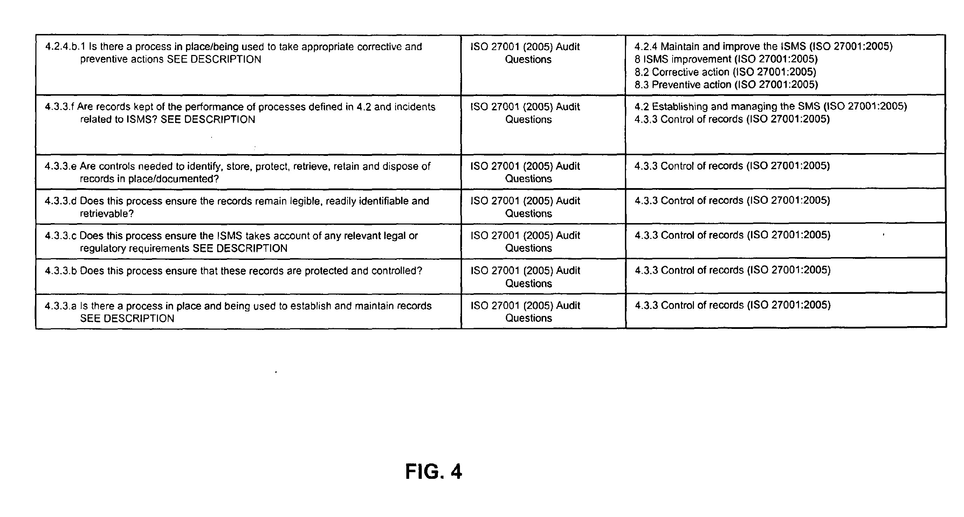

The various questions are then analyzed by the comparator 4 to determine which questions require the same information, i.e. where there is overlap between the requirements of the different regulatory regimes. Thus, as is shown schematically in FIG. 2, various particular requirements in the regulatory regimes 17, 18 and 19, are found, when the relevant questions are generated, to map to one or more particular requirements of the reference model 20. In this way, the requirements of the regulatory regimes are determined to require the same information, even if the wording of those regulatory regimes may not, initially, indicate that the same information is required. Therefore the particular requirements of different regulatory regimes are mapped, as indicated by dashed lines 21 to each other and to the reference model 20. The questions are then collated by the collator 5 into a database in the memory 10, where the mapping associations between the questions and the regulatory regimes that they are applicable to are stored in a matrix form. Examples of a spreadsheet showing the above questions, together with the regulatory scheme to which they apply and the particular requirements of that scheme to which they apply are shown in FIGs 4 to 6.

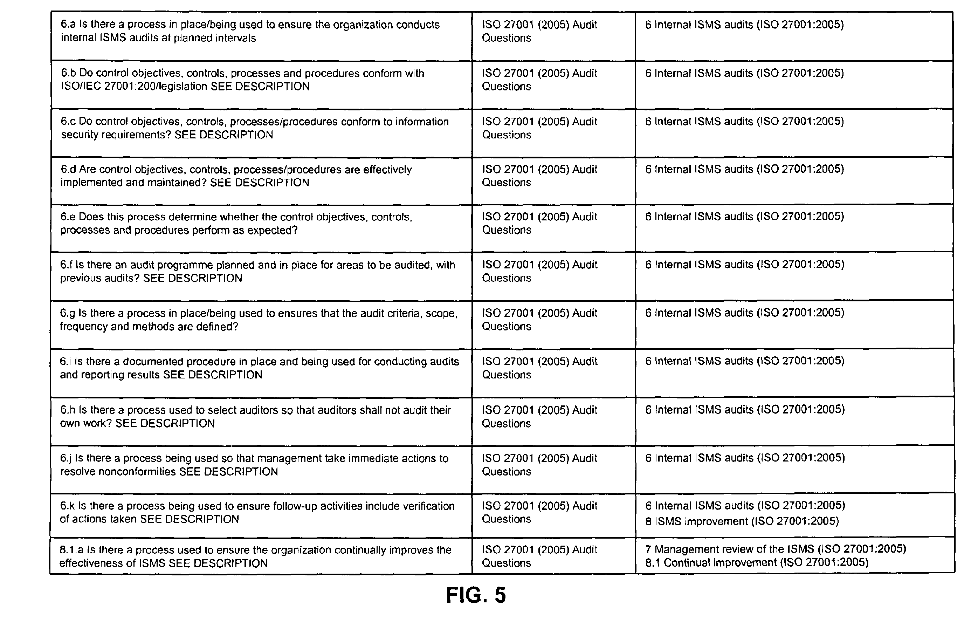

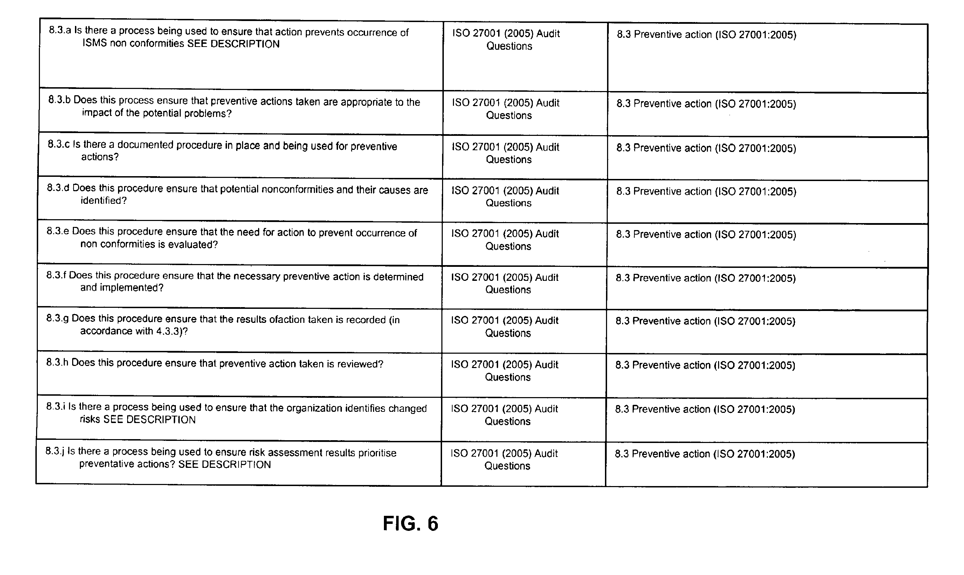

As can be seen in FIG. 4, the questions generated in relation to Section 4.3.3 are shown in the left hand column, with the central column indicating the regulatory regime to which the question relates and the right hand column specifying the particular section(s) of the regulatory regime to which the question relates. Thus, for example, question 4.3.3.f relates not only to Section 4.3.3, but also Section 4.2 of the ISO 27001 standard. Similarly, the first question in FIG. 4 relates to Section 4.2.4 and to Section 8 generally and Sections 8.2 and 8.3 specifically. In FIG. 5, there is shown a similar extract of a matrix with the questions relating to Sections 6.6.1 and 8.1, where it can be seen that questions 6.k and 8.1.a relate to more than one section of the ISO 27001 standard. FIG. 6 shows a similar extract of the matrix for the questions relating to Section 8.3.

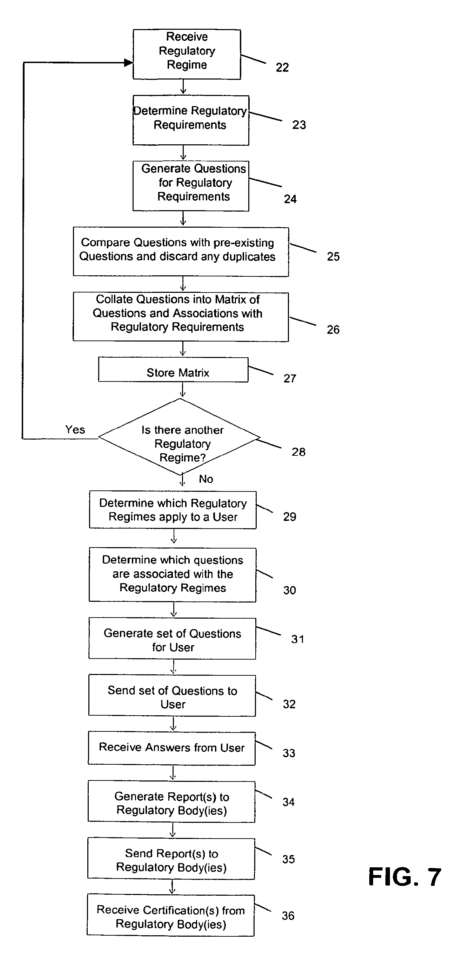

This first part of the process described above is illustrated schematically in FIG. 7, which shows the elements of the process. As there indicated, the regulatory regime is first received (element 22) and then the requirements of the regime are determined (element 23). These requirements are those shown schematically in FIG. 2. Questions are then generated (element 24) for the requirements, based on the reference model, as explained above. The questions generated are then compared (element 25) with pre-existing questions and duplicate questions are discarded, with the remaining questions being collated (element 26) together with the pre-existing questions into a matrix of questions mapped with corresponding associated regulatory regimes. The matrix is then stored (element 27) and the process is repeated for another regulatory regime if it is determined (element 28) that there is another one. Of course these elements 22 to 27 can be repeated at any time, as necessary, to update the stored matrix when a regulatory regime is amended or if a new one is enacted or otherwise applies.

As shown in the rest of FIG. 7, in conjunction with the system shown in FIG. 1, once the matrix of associations between questions and regulatory regimes has been determined substantially without duplication of questions so that, for any particular question, the regulatory regime to which it applies can be determined, and for any particular regulatory regime, the questions that apply to it can be determined, it is possible to easily help a user to comply with the reporting requirements of several (or many) different regulatory regimes without undue burden being imposed on the user. Thus, as indicated in element 29, the various regulatory regimes that apply to a particular user must first be determined. This can be done by the user 16 inputting the information to the system via input interface 7, or by the controller 3 providing various questions, perhaps interactively via a web-based system, to the user 16 in order to make the determination. Once the determination of which regulatory regimes apply to the user, the controller 3 can determine from the matrix stored in the memory 10 which questions are associated with those regulatory regimes (element 30) and can generate a set of questions for that user (element 31) and send the set to the user (element 32) via the output interface 9 in any appropriate manner. Such a set of questions will, of course, have substantially no duplication and therefore will be less burdensome on the user to complete.

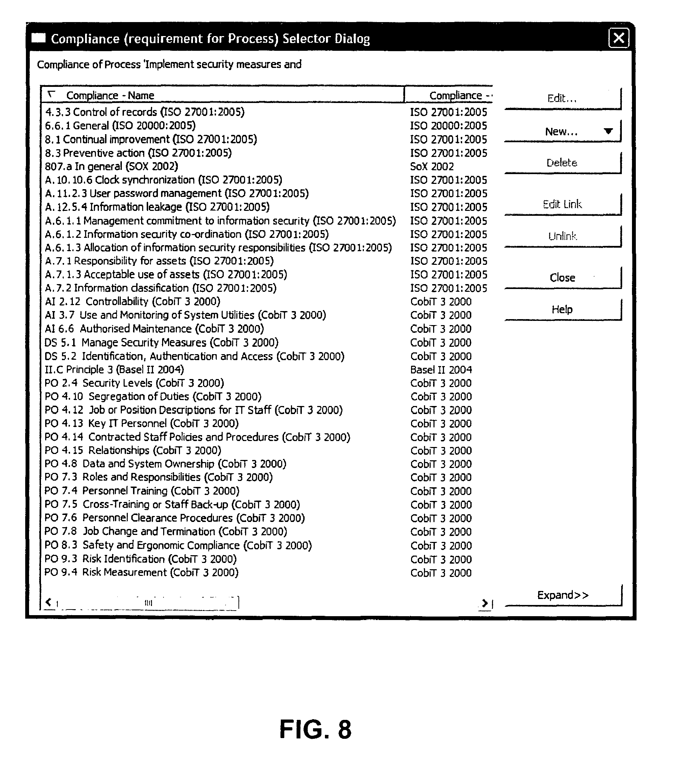

An example of the mapping for the subject matter of the ISO 27001 extracts given above, together with similar requirements for CoblT, Sarbanes-Oxley and Basel II is shown in FIG. 8, which illustrates a screen that would be available on a computer display showing the various requirements for the different regulatory regimes, all having a dependency upon deploying the ITIL^{®} processes. The screen shows, more particularly, the way the matrix can be accessed so as drill into it to obtain any of the associations discussed above. In this case, the screen shows the various Sections of ISO 27001 dealing with "Implementing Security Measures and Maintaining Protection of Organizational Assets" and, by clicking on any of the Sections, the appropriate questions can be found, as well as information about the other Sections and Regulatory Regimes that the same question would apply to. For the avoidance of doubt, the mapping is for the parent process object for the diagram of FIG. 3. The mapping has also been carried out for each of the process objects in FIG. 3, but to simplify this illustration, only those used for the parent object are shown. The matrix also allows users, who may not know how to implement a particular compliance requirement, to drill into the matrix according to the types of requirements and to obtain information on the best practices, for example the aforementioned ITIL^{®} model, for those requirements. In this way, their processes can be set up to match the best practices so as to be easily compatible and consistent with the questions that would need to be answered for compliance.

Ideally, the user 16 will then complete the set of questions and return the answers to the system via the input interface 7 in any desired way. Once the answers have been received by the system (element 33) the controller will generate appropriate forms and reports for each of the regulatory regimes based on the received answers (element 34) and send them to the regulatory bodies in any appropriate manner (element 35). The various regulatory bodies can then review the reports, audit them, and issue the appropriate certification (element 36).

Of course, often, the user will be a large company, where different people will have different responsibilities within the company and the set of questions will need to be divided into sub-sets of questions for completion by different people within the company. Although this division into sub-sets could take place within the user's company, it is also possible for the system to perform this division based on the reference model, so that each sub-set of questions is applicable to a different function within the user. The sub-set can then be sent to that functional department of the user, or, if already known, to the person within the company who has responsibility for that function or is otherwise authorized to answer the questions relating to that function.

Of course, in such circumstances, the answers to each sub-set may well be returned to the system at different times by different people. In this case, the system can be set up to monitor the progress of the process by determining whether answers have been received to particular questions or sets (sub-sets) of questions and to automatically send periodic reminders and even default notices to more senior management in the company if answers are not returned by predetermined deadlines.

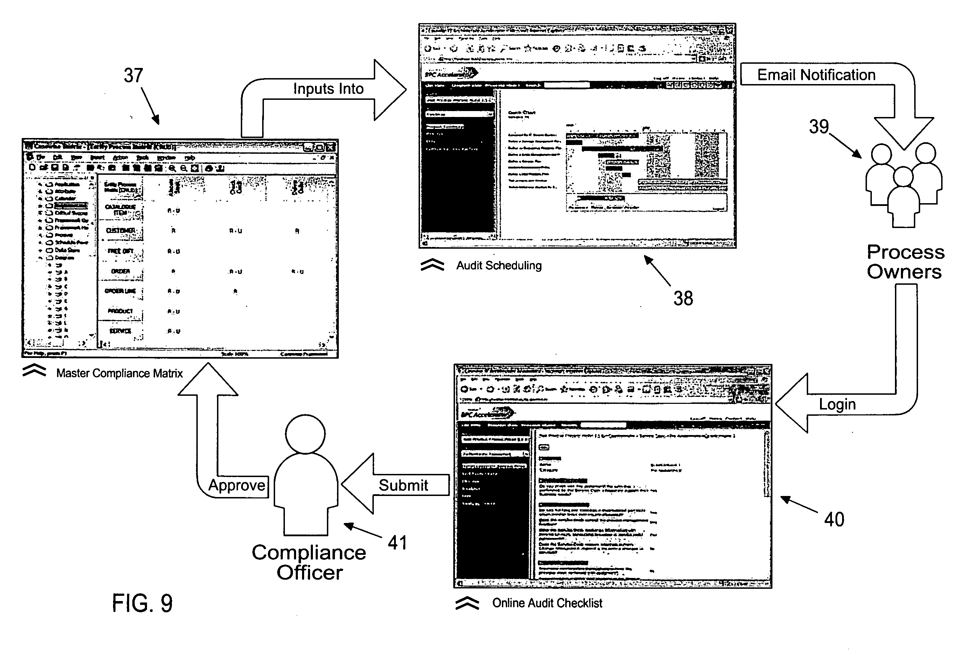

FIG. 9 shows, schematically, how such a process may operate, with a master compliance matrix is displayed (a display 37) which shows all the regulatory regimes applicable to a particular user. That matrix is used to provide the inputs to an audit scheduler, as shown display 38. The audit scheduler may include a web-based chart of the set or sub-set of questions applicable to a particular person (process owner) within the user company, and may have a timeline component to inform the process owner when the questions are to be answered. The provision of such an audit schedule is communicated, for example by email to the particular process owner 39, to inform the process owner that the questions there need to be answered. The questions may be provided, in a web-based system, on-line, with the process owner needing to log-in to access the audit schedule in order to prevent unauthorized access. Once properly accessed, the process owner can navigate the audit schedule to the particular questions that apply to that person so that the questions and checklists can be answered directly on-line, as shown by display 40. In some systems, once the answers have been completed by the process owner, before they are considered to be "final answers", they may need to be approved by a compliance officer 41 within the user company. This may depend on the particular regulatory regime, where, for example, some regimes may require the CEO of the company to approve all such answers. In any event, once approved, the answers are stored in the memory 10 and the master compliance matrix is updated.

It will of course be appreciated that once the answers are provided to some questions and stored, they may not need to be asked again the next time the audit is required. Thus, once the answers have been provided once, the controller may be able to use the same answers the next time a similar question would need to be asked, so that, when generating the set of questions to be asked of a particular user, the controller can determine whether any of them have already been answered previously and, naturally, whether the answers are time-sensitive, so that they need to be answered periodically in order to be valid or whether they are time-insensitive and do not need to be answered repeatedly.

It will be further appreciated that the generation of the sets or sub-sets of questions may involve generating common audit checklists that include questions common to at least two regulatory regimes, and specialist audit checklists that include questions that are specific to only one regulatory regime. Of course, as regulatory regimes change, no longer apply or new ones become applicable, questions may move from a common checklist to a specialist checklist or vice versa (or be deleted altogether).

It will be appreciated that although only some particular embodiments of the invention have been described in detail, various modifications and improvements can be made by a person skilled in the art without departing from the scope of the present invention as defined by the following claims. For example, the reference model can be used to provide "suggested" or default answers to questions, as appropriate, as a form of advice or training for the user to base their practices on the reference model best practices, in advance of the actual audit. It will be clear that the reference model can be used to provide such advice and training at any time in the audit cycle. It should also be apparent that all of the different modules of the system can be co-located or can be located at different locations, with the communications taking place in any appropriate manner, for example, e-mail, over the web, in an internet or intranet environment or in any other way.

## Claims

1. A computerized system (1) for facilitating compliance with a plurality of regulatory regimes, the system comprising:
a first input interface (7) for receiving information regarding a plurality of regulatory regimes;
a second input interface (8) for receiving a plurality of questions in respect of each regulatory regime for determining whether a user is meeting the requirements of that regulatory regime;
a memory (10) for storing the information regarding the plurality of regulatory regimes and the plurality of questions;
a comparator (4) for determining which questions are substantially similar;
a collator (5) for collating the questions to form a matrix of associations between questions and regulatory regimes substantially without duplication of questions so that, for any particular question, the regulatory regime to which it applies can be determined, and for any particular regulatory regime, the questions that apply to it can be determined, the matrix being stored in the memory;
a controller (3) for receiving information as to which of the plurality of regulatory regimes is applicable to a particular user, for determining which questions apply for each of the plurality of regulatory regimes from the matrix of questions and for generating a set of questions for the particular user; and
an output interface (9) for providing the generated set of questions.

2. A system according to claim 1, further comprising:
a communication path for providing the set of questions to the particular user;
a communication path for receiving answers to the set of questions from the particular user;
wherein the controller generates a report to a regulatory body for each of the predetermined regulatory regimes based on the answers received from the particular user and the matrix of questions.

3. A system according to claim 2, wherein the set of questions generated for the particular user is divided into subsets by function, each subset being provided to a particular person responsible for the corresponding function of the user, the particular person being responsible for providing the answers to the subset of questions.

4. A system according to claim 3, wherein the controller generates automatic reminders to the particular person if the answers to the subset of questions are not received within predetermined timeframes.

5. A system according to any preceding claim, wherein, whenever information regarding a new regulatory regime is received at the first input and a corresponding plurality of questions is received at the second input, the comparator compares the received questions for the new regulatory regime with the existing questions in the matrix to determine which questions are substantially similar and the collator updates the matrix with associations between the new regulatory regime and the existing questions and/or with new questions.

6. A system according to any preceding claim, further comprising a module for generating the questions for each regulatory regime.

7. A system according to claim 6, wherein the questions generated for each regulatory regime are based on a predetermined reference model that complies with the regulatory regime.

8. A system according to claim 7, wherein the predetermined reference model is stored in the memory and is used by the controller to provide advice to a user as to how to operate in order to comply with the regulatory regime.

9. A computerized method for facilitating compliance with a plurality of regulatory regimes, the method comprising:
for each regulatory regime, receiving (22, 23) its requirements and
generating (24) a plurality of questions to determine whether a user is meeting those requirements;
comparing (25) the questions generated for the plurality of regulatory regimes to determine which questions are substantially similar;
collating (26) the questions to form a matrix of associations between questions and regulatory regimes substantially without duplication of questions so that, for any particular question, the regulatory regime to which it applies can be determined, and for any particular regulatory regime, the questions that apply to it can be determined;
storing (27) the matrix; and
for a particular user needing to meet one or more predetermined regulatory regimes, determining (29, 30) which questions apply for each of the predetermined regulatory regimes from the matrix of questions and generating (31) a set of questions for that user.

10. A method according to claim 9, further comprising:
providing the set of questions to the particular user;
receiving answers to the set of questions from the particular user; generating a report to a regulatory body for each of the predetermined regulatory regimes based on the answers received from the particular user and the matrix of questions; and
forwarding the appropriate report to each of the regulatory bodies.

11. A method according to claim 10, wherein the set of questions generated for the particular user is divided into subsets by function, each subset being provided to a particular person responsible for the corresponding function of the user, the particular person being responsible for providing the answers to the subset of questions.

12. A method according to claim 11, further comprising generating automatic reminders to the particular person if the answers to the subset of questions are not received within predetermined timeframes.

13. A method according to any one of claims 9 to 12, further comprising:
whenever a new regulatory regime is introduced, receiving its requirements and generating a plurality of questions that are intended to elicit information from a user as to whether the user is meeting those requirements;
comparing the questions generated for the new regulatory regime with the existing questions in the matrix to determine which questions are substantially similar; and
updating the matrix with associations between the new regulatory regime and the existing questions and/or with new questions.

14. A method according to any one of claims 9 to 13, wherein the questions generated for each regulatory regime may be satisfied by adopting the best practices detailed in a predetermined reference model that complies with the regulatory regime.

15. A method according to claim 14, wherein the predetermined reference model is used to provide advice to a user as to how to operate in order to improve compliance with the regulatory regime.

16. A system or a method according to any preceding claim, further providing a visual display of the matrix showing mapping of the associations between the regulatory regimes and the questions.

17. A system or a method according to claim 16, wherein the mapping is displayed in graphical or pictographic form.

18. A system or a method according to any preceding claim, wherein the matrix includes a hierarchical structure of sub-questions that are subordinate to a particular question and have the same associations as the particular question.

19. A system or a method according to any preceding claim, implemented on a networked computer system.

20. A system or a method according to any preceding claim, wherein the regulatory regimes include any two or more regulatory regimes taken from the group comprising:
mandatory governmental regulations;
mandatory non-governmental regulations;
voluntary governmental regulations;
voluntary non-governmental regulations;
national or international standards regulations;
national or international trade body regulations; and
internal user-required regulations.

21. A system or a method according to any preceding claim, wherein the predetermined reference model or best practice framework comprises the Information Technology Infrastructure Library (ITIL^{®}) model, or the Enhanced Telecoms Operations Map (ETOM) or the Control Objectives for Information and related Technology (CoblT) framework or another best practice framework or reference model.
